# EUROPEAN PATENT APPLICATION

(11) **EP 4 668 434 A1**
(43) Date of publication of application: **24.12.2025**
(21) Application number: 25178748.7
(22) Date of filing: 26.05.2025
(51) Int. Cl.: H01M 50/209, H01M 50/264, H01M 50/296, H01M 50/507, H01M 50/55, H01M 50/553, H01M 50/244, H01M 50/271, H01M 10/0525

(54) **BATTERY ASSEMBLY AND BATTERY PACK**

(30) Priority: 17.06.2024 JP 2024097292
(71) Applicant: Prime Planet Energy & Solutions, Inc., Chuo-ku, Tokyo 103-0022 (JP)
(72) Inventor: TERAUCHI, Shinobu, Tokyo, 103-0022 (JP)
(74) Representative: Kuhnen & Wacker Patent- und Rechtsanwaltsbüro PartG mbB

(57) **Abstract**

A battery module (1) in which a plurality of battery cells (10) each having one side surface on which an electrode terminal (11) is disposed are stacked includes: a first binding bar (100) provided to cover a side of each of the plurality of battery cells (10) on which the electrode terminal (11) is disposed; and a plurality of bus bars (500) that each electrically join electrode terminals (11) of battery cells (10) adjacent to each other, wherein each of the bus bars (500) is fixed at a position facing the electrode terminals (11) on an inner surface (110a) side of the first binding bar (100) on which the battery cells (10) are located, and the bus bar (500) is not fixed to each of the electrode terminals (11) and is in contact with and connected to the electrode terminal (11).

## Description

### CROSS REFERENCE TO RELATED APPLICATIONS

This nonprovisional application is based on Japanese Patent Application No. 2024-097292 filed on June 17, 2024 with the Japan Patent Office, the entire contents of which are hereby incorporated by reference.

### BACKGROUND OF THE INVENTION

### Field of the Invention

The present disclosure relates to a battery assembly and a battery pack.

### Description of the Background Art

For example, Japanese Patent Laying-Open No. 2020-149918 relates to a structure of a battery assembly and discloses a bus bar for electrically connecting a positive electrode terminal (electrode terminal) of a battery cell and a negative electrode terminal (electrode terminal) of an adjacent battery cell.

### SUMMARY OF THE INVENTION

In a configuration of a battery assembly using prismatic battery cells, bus bars are provided on surfaces of battery cells on which electrode terminals are provided so as to electrically connect positive electrode terminals and negative electrode terminals of adjacent battery cells, and each of the entire surfaces of the battery cells on which the electrode terminals are provided is covered with a resin structure for the sake of insulation from outside.

On the other hand, binding bars that each restrain the plurality of battery cells are disposed on surfaces (side surfaces) other than the surface on which the electrode terminal is provided and a surface opposite to the surface on which the electrode terminal is provided.

Therefore, when there is a restriction in outer dimension of the battery assembly in the configuration of the conventional battery assembly, the size of the battery assembly is restricted for the arrangement of the bus bars and the arrangement of the binding bars, disadvantageously.

The present disclosure has been made to solve the above-described problem, and has an object to provide: a battery assembly having a high volume energy density while suppressing a restriction on the size of the battery assembly; and a battery pack including the battery assembly.

The present technology provides the following battery assembly and the following battery pack.
[1] A battery assembly according to the present disclosure in which a plurality of battery cells each having one side surface on which an electrode terminal is disposed are stacked, the battery assembly comprising: a first binding bar provided to cover a side of each of the plurality of battery cells on which the electrode terminal is disposed; and a plurality of bus bars that each electrically connect electrode terminals of battery cells adjacent to each other, wherein each of the bus bars is fixed at a position facing the electrode terminals on an inner surface side of the first binding bar on which the battery cells are located, and the bus bar is not fixed to each of the electrode terminals and is in contact with and connected to the electrode terminal.
[2] The battery assembly according to [1], comprising a second binding bar provided to cover a side of each of the battery cells opposite to the side of the battery cell on which the electrode terminal is disposed, wherein the first binding bar and the second binding bar are fastened and fixed together to generate a force for pressing the bus bar against the electrode terminal.
[3] The battery assembly according to [1] or [2], wherein a fixing recess to fix the bus bar is provided in the inner surface of the first binding bar.
[4] The battery assembly according to any one of [1] to [3], wherein each of the plurality of battery cells is a lithium ion battery cell.
[5] A battery pack comprising the battery assembly according to any one of [1] to [4].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an overall perspective view showing a configuration of a battery module according to an embodiment.
Fig. 2 is an exploded perspective view showing the configuration of the battery module according to the embodiment.
Fig. 3 is an exploded side view showing the configuration of the battery module according to the embodiment.
Fig. 4 is a perspective view showing a configuration of a battery cell according to the embodiment.
Fig. 5 is a first perspective view showing a configuration of a first binding bar according to the embodiment.
Fig. 6 is a second perspective view showing the configuration of the first binding bar according to the embodiment.
Fig. 7 is a first perspective view showing a configuration of a bus bar according to the embodiment.
Fig. 8 is a second perspective view showing the configuration of the bus bar according to the embodiment.
Fig. 9 is a cross sectional view taken along a line IX-IX in Fig. 7.
Fig. 10 is a cross sectional view taken along a line X-X in Fig. 7.
Fig. 11 is a cross sectional view taken along a line XI-XI in Fig. 1.
Fig. 12 is a cross sectional view showing a contact connection structure between an electrode terminal and the bus bar as viewed in a cross section in a DR1 direction.
Fig. 13 is an enlarged view of a region surrounded as XIII in Fig. 11.
Fig. 14 is a cross sectional view of another implementation corresponding to a region surrounded as XIV in Fig. 11.
Fig. 15 is an enlarged view of a region surrounded as XV in Fig. 11.
Fig. 16 is a perspective view showing a configuration of a collective terminal base according to the embodiment.
Fig. 17 is a perspective view showing the configuration of the collective terminal base in a state in which the first binding bar and the second binding bar are detached from the battery module in Fig. 16.
Fig. 18 is a cross sectional view taken along a line XVIII-XVIII in Fig. 16.
Fig. 19 is a cross sectional view taken along a line XIX in Fig. 17.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. In the embodiments described below, each component is not necessarily essential to the present technology unless otherwise stated particularly. The present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other battery packs such as a nickel-metal hydride battery and a sodium-ion battery. In the present specification, the term "electrode" may collectively represent a positive electrode and a negative electrode. A "battery pack" is used as a power supply for driving a vehicle such as a hybrid electric vehicle (HEV), a plug-in hybrid electric vehicle (PHEV), or a battery electric vehicle (BEV). It should be noted that the use of the "battery" or "battery pack" is not limited. Each of the battery and the battery pack can be used in, for example, a stationary power storage facility.

In each of the figures, the stacking direction of battery cells 10 included in a battery module 1 is defined as a DR1 direction. The DR1 direction coincides with the thickness direction of each of battery cells 10. The height direction of battery module 1 is defined as a DR2 direction. The DR2 direction coincides with the height direction of battery cell 10. The width direction of battery module 1 is defined as a DR3 direction. The DR3 direction coincides with the width direction of battery cell 10. The DR1 direction, the DR2 direction, and the DR3 direction are substantially orthogonal to one another.

In order to facilitate understanding of the invention, the size of each configuration in the figures is illustrated to be changed from its actual size. For convenience of description, in accordance with arrangement relations in the figures, side surfaces of battery module 1 located in the DR1 direction may be referred to as "short side surfaces" of battery module 1, surfaces of battery module 1 located in the DR2 direction may be referred to as an "upper side surface" and a "lower side surface" of battery module 1, and side surfaces of battery module 1 located in the DR3 direction may be referred to as "long side surfaces" of battery module 1.

### (Battery Module 1)

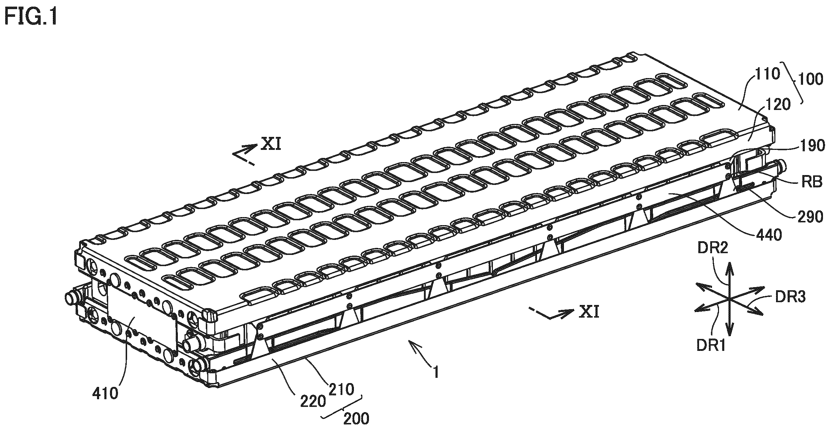

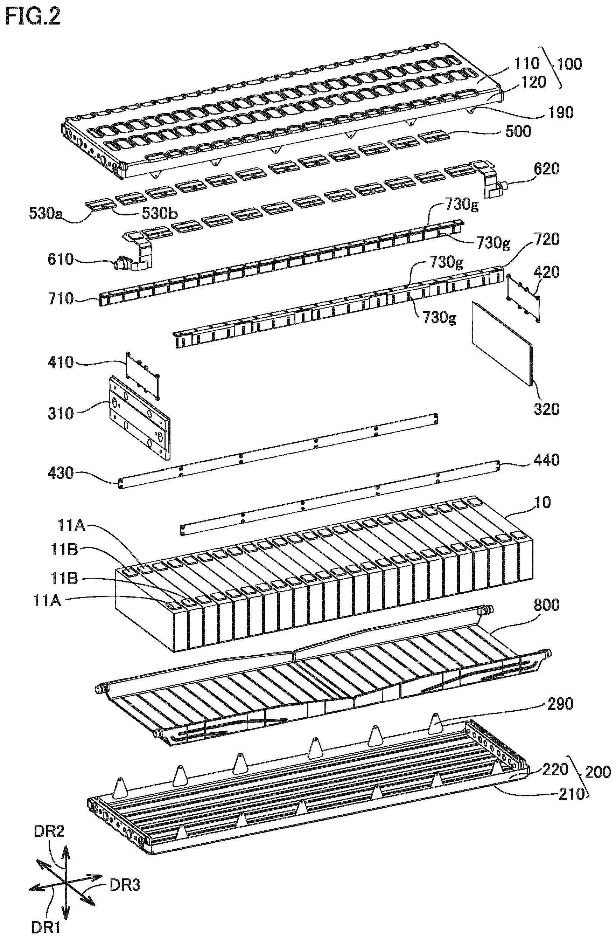

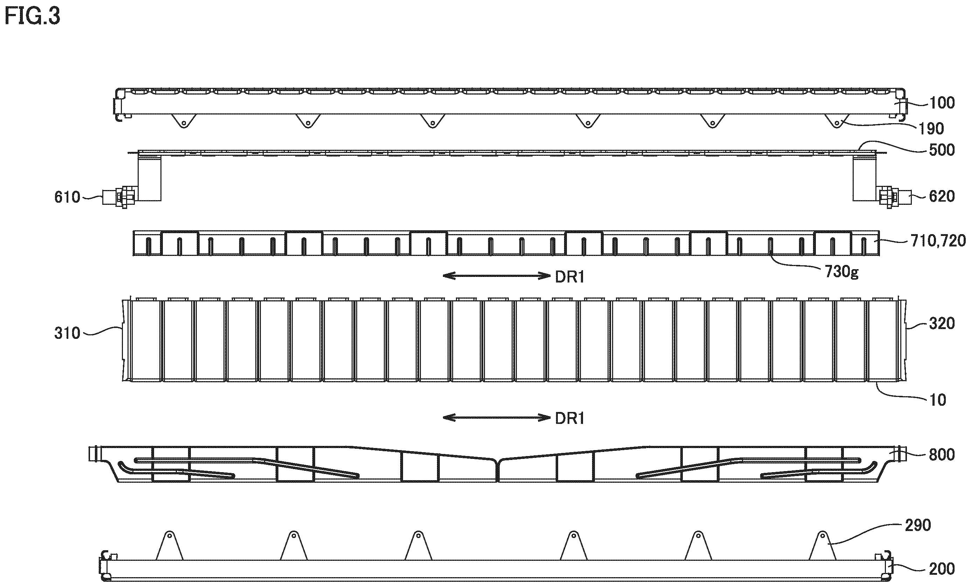

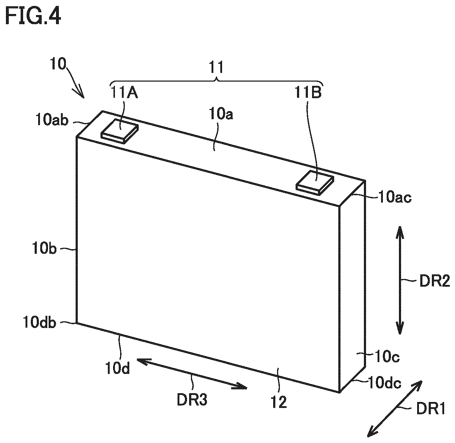

A configuration of battery module 1 (battery assembly) according to the present embodiment will be described with reference to Figs. 1 to 4. Fig. 1 is an overall perspective view showing the configuration of battery module 1, Fig. 2 is an exploded perspective view showing the configuration of battery module 1, Fig. 3 is an exploded side view showing the configuration of battery module 1, and Fig. 4 is a perspective view showing a configuration of each battery cell 10.

The configuration of battery module 1 will be described with reference to Figs. 1 to 4. Battery module 1 includes a first binding bar 100, bus bars 500, a first collective terminal base 610, a second collective terminal base 620, a first cushion 710, a second cushion 720, a first end plate 310, a second end plate 320, a first coupling plate 410, a second coupling plate 420, a third coupling plate 430, a fourth coupling plate 440, a plurality of battery cells 10, a cooling device 800, and a second binding bar 200.

A battery pack is obtained by accommodating battery module 1 in a pack case (not shown).

On an inner surface of each of first binding bar 100 and second binding bar 200, a restraint force generation mechanism using an elastic member is provided in order to generate, in each of battery cells 10, restraint force in the stacking direction (DR1 direction) of stacked battery cells 10, but is not shown here.

The plurality of battery cells 10 are stacked in the thickness direction (DR1 direction) of each of battery cells 10, and in the present embodiment, 24 battery cells 10 are stacked. The number of battery cells 10 is appropriately selected and is not limited to 24.

First end plate 310 and second end plate 320 are disposed at respective end portions of the stack of battery cells 10, and in a state in which battery cells 10 are accommodated in battery module 1, battery cells 10 stacked are pressed from the short side surface sides by first end plate 310 and second end plate 320, and are restrained between the two end plates.

Referring to Fig. 4, each of battery cells 10 has a rectangular parallelepiped appearance having a flat surface shape. Electrode terminals 11 include a positive electrode terminal 11A and a negative electrode terminal 11B. Electrode terminals 11 are provided on the upper surface of a housing 12 having a prismatic shape. An electrode assembly (not shown) and an electrolyte solution (not shown) are accommodated in housing 12. The thickness direction of battery cell 10 corresponds to the DR1 direction, the height direction of battery cell 10 corresponds to the DR2 direction, and the width direction of battery cell 10 corresponds to the DR3 direction. In the state in which battery cells 10 are accommodated in battery module 1, positive electrode terminals 11A and negative electrode terminals 11B of battery cells 10 are alternately disposed along the DR1 direction.

Referring again to Figs. 1 to 3, bus bars 500 are used for electric joining with positive electrode terminals 11A and negative electrode terminals 11B of adjacent battery cells 10. In the present embodiment, for the electric joining between each bus bar 500 and each electrode terminal 11 (positive electrode terminal 11A and negative electrode terminal 11B), a contact connection structure in which bus bar 500 and electrode terminal 11 are only in abutment with each other is employed, rather than a fixed connection structure using welding or the like.

The plurality of bus bars 500 are fixed in advance at predetermined positions on an inner surface 110a of first binding bar 100 located on the side covering electrode terminals 11 of battery cell 10. With this configuration, each bus bar 500 and each electrode terminal 11 are not fixed to each other, and battery cells 10 stacked can be therefore slid in the DR1 direction, i.e., the stacking direction of battery cells 10 in the state in which battery cells 10 are accommodated in battery module 1.

First collective terminal base 610 for extracting power is provided at positive electrode terminal 11A or negative electrode terminal 11B of battery cell 10 that is in contact with first end plate 310. Similarly, second collective terminal base 620 for extracting power is provided at positive electrode terminal 11A or negative electrode terminal 11B of battery cell 10 that is in contact with second end plate 320. Both first collective terminal base 610 and second collective terminal base 620 are located at the side surface end portions (both end portions in the DR1 direction) of battery module 1.

First binding bar 100 includes: a first main body plate portion 110 that covers stacked battery cells 10 from the electrode terminal 11 side (upper surface side in the figure); and a first peripheral wall portion 120 that extends to the second binding bar 200 side (lower side in the figure) on substantially the entire periphery of first main body plate portion 110. Second binding bar 200 includes: a second main body plate portion 210 that covers stacked battery cells 10 from a side surface (lower surface side in the figure) thereof opposite to electrode terminal 11; and a second peripheral wall portion 220 that extends to the first binding bar 100 side (upper side in the figure) on substantially the entire periphery of second main body plate portion 210.

First cushion 710 and second cushion 720 each extending in the stacking direction (DR1 direction) are disposed between first binding bar 100 and the upper corner portion of each of the plurality of stacked battery cells 10 on the upper side. Cooling device 800 composed of a resin and extending in the stacking direction (DR1 direction) is disposed between second binding bar 200 and the lower side of each of stacked battery cells 10.

Regarding the fastening of first binding bar 100 and second binding bar 200, on the long side surface side in the DR3 direction, a plurality of first extension plates 190 provided at first peripheral wall portion 120 of first binding bar 100 and a plurality of second extension plates 290 provided at second peripheral wall portion 220 of second binding bar 200 are fastened and fixed together via fourth coupling plate 440 (on the front side in the figure) by using rivets RB. Similarly, on the side opposite to the side shown in the figure, first extension plates 190 and second extension plates 290 are fastened and fixed together via third coupling plate 430 by using rivets RB.

On the short side surface side in the DR1 direction, first peripheral wall portion 120 and second peripheral wall portion 220 are fastened and fixed together by first coupling plate 410. Also on the side opposite thereto, first peripheral wall portion 120 and second peripheral wall portion 220 are fastened and fixed together by second coupling plate 420.

Battery cells 10 are restrained in the stacking direction (DR1 direction) of stacked battery cells 10 such that stacked battery cells 10 are slidable in the stacking direction (DR1 direction) by restraint force generation mechanisms respectively provided between first end plate 310 and first peripheral wall portion 120 of first binding bar 100, between first end plate 310 and second peripheral wall portion 220 of second binding bar 200, between second end plate 320 and first peripheral wall portion 120 of first binding bar 100, and between second end plate 320 and second peripheral wall portion 220 of second binding bar 200.

With the above configuration, even when a battery cell 10 is expanded, bus bar 500 and electrode terminal 11 are slid in contact with each other while maintaining the state in which they are in contact with each other. Thus, the movement of battery cell 10 due to the expansion can be absorbed in battery module 1 while maintaining the electric connection and maintaining the restraint state of each of battery cells 10 in the stacking direction.

Next, a detailed structure of each portion of battery module 1 having the above-described configuration will be described with reference to figures.

### (Structure of First Binding Bar 100)

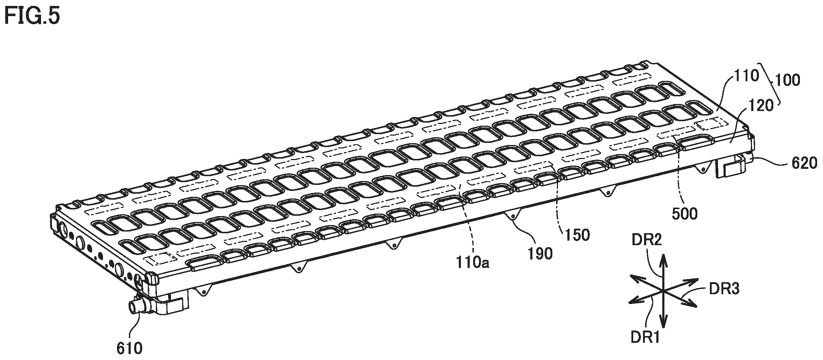

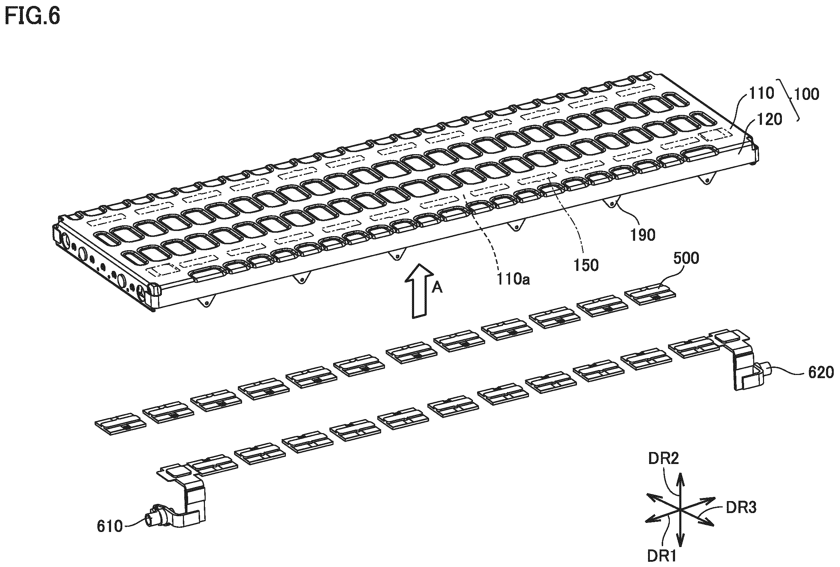

The structure of first binding bar 100 will be described with reference to Figs. 5 and 6. Figs. 5 and 6 are first and second perspective views each showing the configuration of first binding bar 100. First binding bar 100 is provided to cover the side of each of the plurality of battery cells 10 on which electrode terminal 11 is disposed.

First binding bar 100 includes: first main body plate portion 110 that covers stacked battery cells 10 from the electrode terminal 11 side; and first peripheral wall portion 120 that extends to the second binding bar 200 side on substantially the entire periphery of first main body plate portion 110.

The plurality of first extension plates 190 extending to the second binding bar 200 side are provided at predetermined pitches in first peripheral wall portion 120. Each of first binding bar 100 and first extension plates 190 is composed of a metal, but has a surface provided with an insulating coating.

On the inner surface 110a side of first main body plate portion 110 on which battery cells 10 are located, the plurality of bus bars 500 are fixed in advance at positions facing electrode terminals 11 provided in battery cells 10. First collective terminal base 610 and second collective terminal base 620 are provided at side surface end portions (both end portions in the DR1 direction) in the stacking direction of battery cells 10.

For fixing of bus bar 500 to the inner surface 110a side of first main body plate portion 110, various types of known fixing techniques using an adhesive agent, an adhesive tape, or the like may be used. In the present embodiment, inner surface 110a of first main body plate portion 110 may be provided in advance with fixing recesses 150 at positions at which bus bars 500 are to be fixed. With fixing recesses 150, attachment (direction A in Fig. 6) and positioning of bus bar 500 with respect to inner surface 110a of first main body plate portion 110 is facilitated. Fixing recesses 150 do not necessarily need to be provided.

Referring to Fig. 2, second binding bar 200 basically has the same configuration as that of first binding bar 100. Second binding bar 200 includes: second main body plate portion 210 that covers stacked battery cells 10 from the side surface thereof opposite to electrode terminal 11; and second peripheral wall portion 220 that extends to the first binding bar 100 side on substantially the entire periphery of second main body plate portion 210.

The plurality of second extension plates 290 extending to the first binding bar 100 side are provided at predetermined pitches in second peripheral wall portion 220 at positions facing first extension plates 190. Each of second binding bar 200 and second extension plates 290 is composed of a metal, but has a surface provided with an insulating coating.

### (Bus Bar 500)

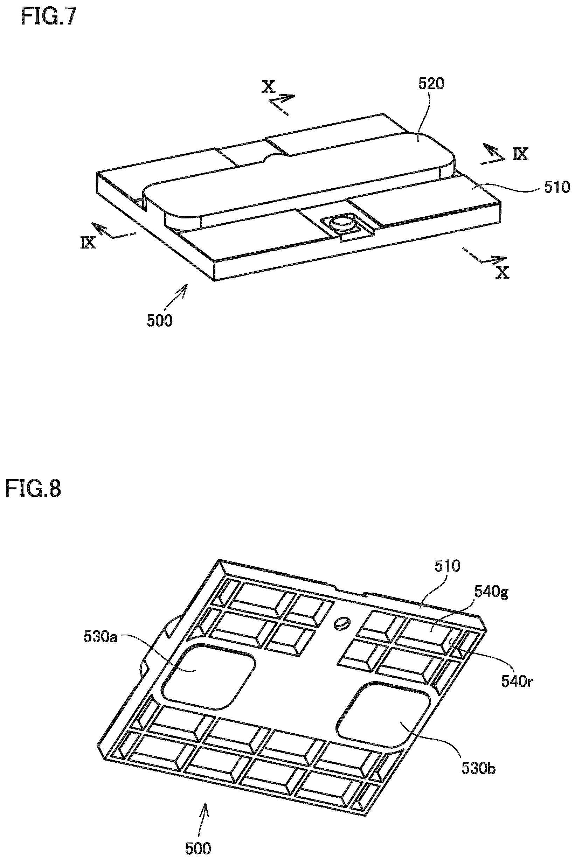

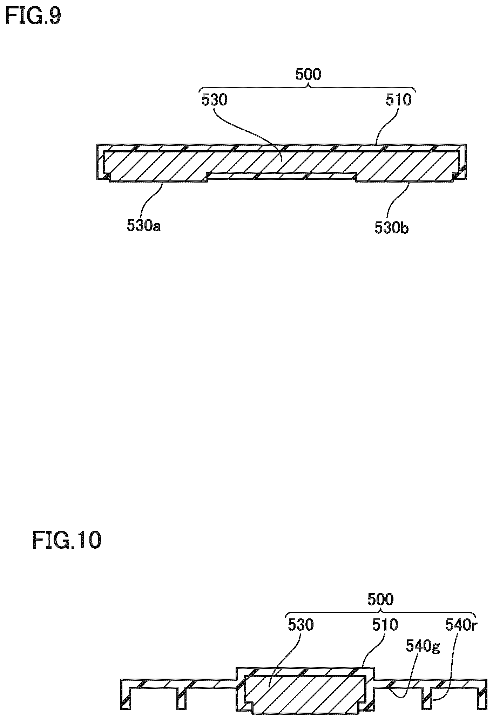

Next, a structure of each of bus bars 500 will be described with reference to Figs. 7 to 10. Figs. 7 and 8 are first and second perspective views each showing the configuration of bus bar 500, Fig. 9 is a cross sectional view taken along a line IX-IX in Fig. 7, and Fig. 10 is a cross sectional view taken along a line X-X in Fig. 7.

Bus bar 500 includes: a base portion 510 having a rectangular shape and composed of a resin; and a bus bar terminal 530 embedded in base portion 510 and having a first contact surface 530a and a second contact surface 530b each exposed from base portion 510 to make contact with electrode terminal 11. The outer shape of base portion 510 is not limited to the rectangular shape.

A positioning protrusion 520 extending in one direction is provided on the front surface side of base portion 510. By fitting this positioning protrusion 520 into fixing recess 150 provided in inner surface 110a of first main body plate portion 110, bus bar 500 can be readily positioned and fixed to first main body plate portion 110. As described above, bus bar 500 may be fixed to the inner surface 110a side of first main body plate portion 110 by using various types of known fixing techniques using an adhesive agent, an adhesive tape, or the like.

Bus bar terminal 530 is embedded in base portion 510 along the direction in which positioning protrusion 520 extends, and first contact surface 530a and second contact surface 530b of bus bar terminal 530 are exposed on the rear surface side of base portion 510. The direction in which first contact surface 530a and second contact surface 530b are arranged may coincide with the one direction in which positioning protrusion 520 extends.

In order to attain a reduced weight of bus bar 500 and secure rigidity of base portion 510, ribs 540r and groove portions 540g are provided in the form of a lattice on the rear surface side of base portion 510. Each of first contact surface 530a and second contact surface 530b has a rectangular shape, but is not limited to this shape.

For bus bar terminal 530, a material having electrical conductivity is used to attain electric connection by making contact with electrode terminal 11 (positive electrode terminal 11A and negative electrode terminal 11B) of each battery cell 10. In the present embodiment, since battery cell 10 is provided to be slidable in the stacking direction (DR1 direction), bus bar terminal 530 and electrode terminal 11 are to be slid in contact with each other. Therefore, for bus bar terminal 530, a material preferable for electric conductivity, heat resistance, and contact slidability between bus bar terminal 530 and electrode terminal 11 may be selected, and carbon is preferably used.

Referring again to Fig. 2, each of battery cells 10 includes positive electrode terminal 11A and negative electrode terminal 11B, and battery cells 10 are stacked such that positive electrode terminals 11A and negative electrode terminals 11B are alternately arranged. Bus bar 500 electrically connects positive electrode terminal 11A and negative electrode terminal 11B adjacent to each other in the stacking direction. First contact surface 530a of bus bar 500 is brought into contact with and connected to one of positive electrode terminal 11A and negative electrode terminal 11B, and second contact surface 530b is brought into contact with and connected to the other of positive electrode terminal 11A and negative electrode terminal 11B. As a result, in the present embodiment, the plurality of battery cells 10 are connected in series, thereby extracting power from first collective terminal base 610 and second collective terminal base 620 connected to electrode terminals 11 of battery cells 10 located at the both end portions.

It should be noted that depending on a manner of use of battery module 1, the plurality of battery cells 10 can be connected in parallel. On this occasion, the plurality of battery cells 10 are arranged such that positive electrode terminals 11A are adjacent to each other and negative electrode terminals 11B are adjacent to each other. Bus bar 500 electrically connects positive electrode terminals 11A adjacent to each other in the stacking direction and electrically connects negative electrode terminals 11B adjacent to each other in the stacking direction.

### (Pressing of Bus Bars 500 against Electrode Terminals 11)

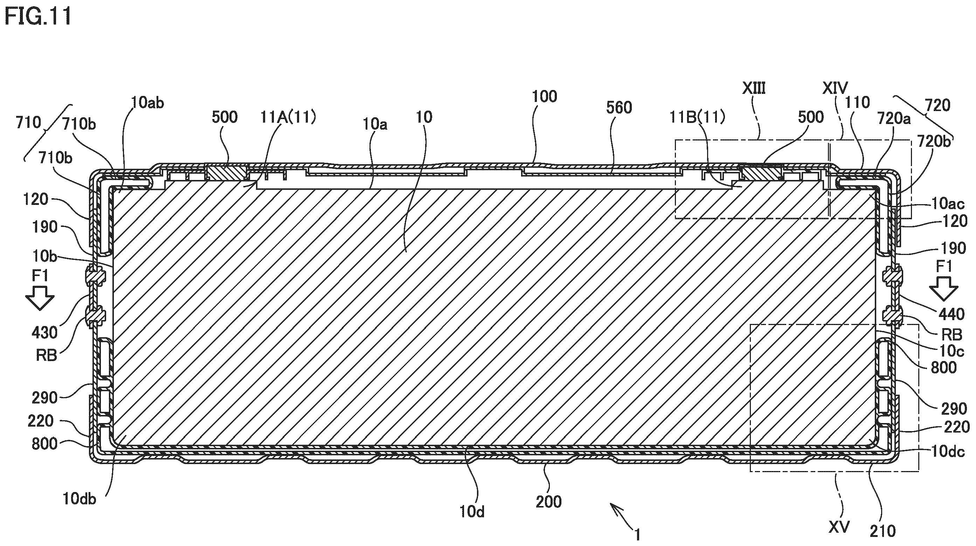

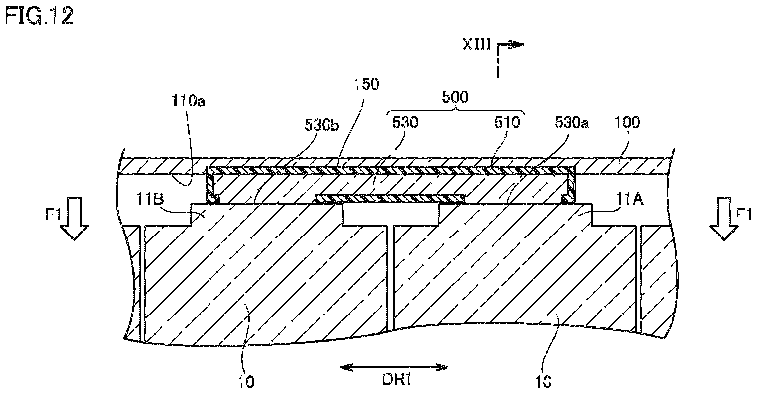

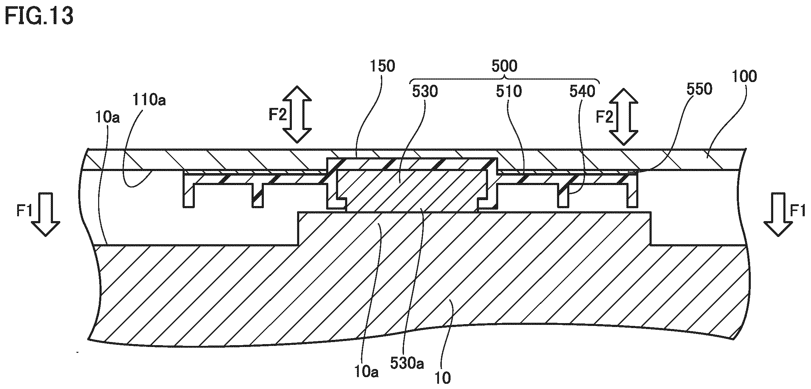

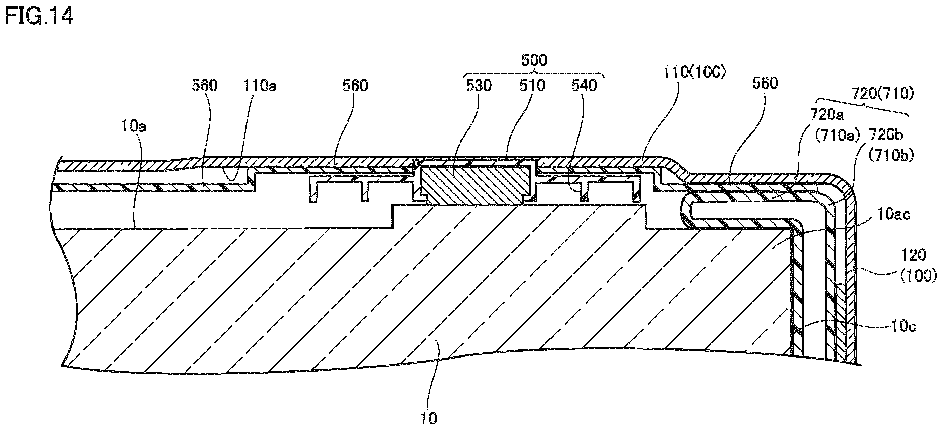

Next, pressing of bus bars 500 against electrode terminals 11 by using first binding bar 100 and second binding bar 200 will be described with reference to Figs. 11 and 14. Fig. 11 is a cross sectional view taken along a line XI-XI in Fig. 1, Fig. 12 is a cross sectional view showing the contact connection structure between electrode terminal 11 and bus bar 500 as viewed in a cross section in the DR1 direction, Fig. 13 is an enlarged view of a region surrounded as XIII in Fig. 12, and Fig. 14 is a cross sectional view of another implementation corresponding to the region surrounded as XIII in Fig. 11.

Referring to Fig. 11, in first binding bar 100 and second binding bar 200, first extension plates 190 provided at first peripheral wall portion 120 and second extension plates 290 provided at second peripheral wall portion 220 are fastened and fixed to third coupling plate 430 (on the left side of the shown cross section) and fourth coupling plate 440 (on the right side of the shown cross section) by using rivets RB. On this occasion, first binding bar 100 and second binding bar 200 are fixed in the state in which the external forces for bringing them closer to each other are applied thereto. As a result, a force (arrow F1 in the figure) for pressing bus bar 500 from first binding bar 100 to the electrode terminal 11 side is generated.

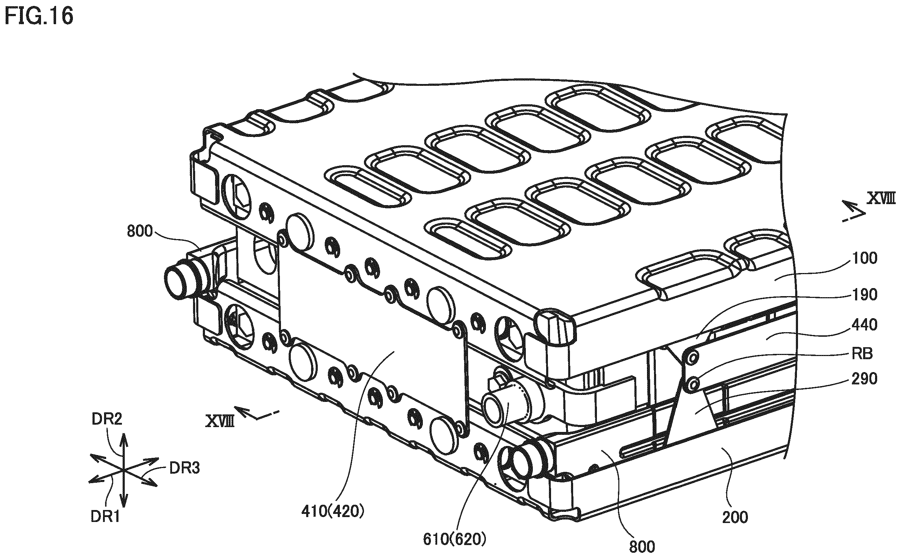

First peripheral wall portion 120 and second peripheral wall portion 220 are coupled together also by first coupling plate 410 disposed at the side surface end portion (end portion in the DR1 direction) of battery module 1, and first peripheral wall portion 120 and second peripheral wall portion 220 are coupled together also by second coupling plate 420 disposed at the side surface end portion (end portion in the DR1 direction) of battery module 1 (see Figs. 1 and 16).

Fig. 12 is a cross sectional view of a state in which first contact surface 530a of bus bar 500 is in contact with and connected to positive electrode terminal 11A of battery cell 10 and second contact surface 530b of bus bar 500 is in contact with and connected to negative electrode terminal 11B of battery cell 10. The force (arrow F1 in the figure) for pressing bus bar 500 against electrode terminal 11 of battery cell 10 is applied to first binding bar 100 by fastening and fixing it to second binding bar 200.

The contact connection structure in which electrode terminal 11 of battery cell 10 and each of first contact surface 530a and second contact surface 530b are only in abutment with each other is employed, rather than the fixed connection structure using welding or the like. As a result, sliding is allowed between electrode terminal 11 and each of first contact surface 530a and second contact surface 530b, with the result that battery cell 10 can be slid along the stacking direction (DR1 direction).

Since an elastic tape 550 such as a foam tape is interposed between base portion 510 of bus bar 500 and inner surface 110a of first binding bar 100 as shown in Fig. 13, a force for pressing bus bar 500 against electrode terminal 11 of battery cell 10 may be further applied by a restoring force (arrow F2 in the figure) of elastic tape 550.

As shown in Fig. 14, an insulating sheet 560 composed of a resin may be provided between base portion 510 of bus bar 500 and inner surface 110a of first binding bar 100 so as to cover the side of each battery cell 10 on which electrode terminal 11 is provided. Thus, insulation performance between first binding bar 100 and battery cell 10 can be improved.

As described above, by fixing bus bar 500 to the inner surface of first binding bar 100 in advance so as to form first binding bar 100 and bus bar 500 into an integral structure, the height of battery module 1 in the DR2 direction can be low.

Further, another member to support bus bar 500 does not need to be employed, thereby attaining a reduced number of components. Further, since the plurality of stacked battery cells 10 can be restrained by using the whole of first binding bar 100 and the whole of second binding bar 200, it is expected that the material strength of the member for restraining battery cells 10 can be reduced while increasing the restraint force for each of battery cells 10.

Furthermore, since carbon is used for bus bar terminal 530 of bus bar 500, electric connection between bus bar terminal 530 and electrode terminal 11 of each of battery cells 10 can be maintained while securing electric conductivity, heat resistance, and contact slidability therebetween, and the movement of battery cell 10 due to the expansion can be absorbed in battery module 1 while maintaining the restraint state of battery cell 10 in the stacking direction of battery cells 10.

### (Holding Structure for Battery Cells 10 in Battery Module 1)

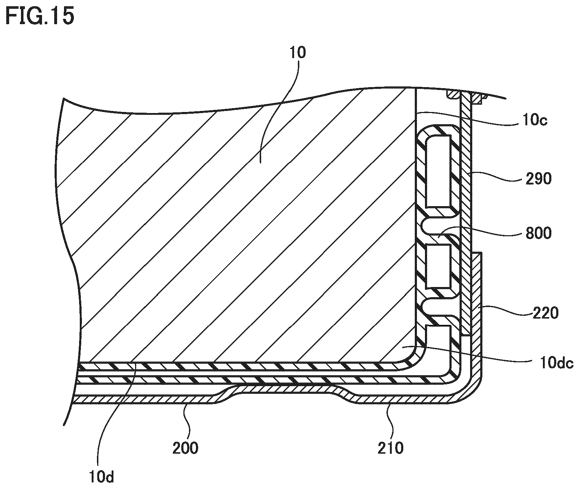

Next, a holding structure for battery cells 10 in battery module 1 will be described with reference to Figs. 2, 3, 11, 14, and 15. Fig. 15 is an enlarged view of a region surrounded as XV in Fig. 11.

Referring again to Figs. 2 and 3, first cushion 710 is provided at one corner portion located on one side in a direction intersecting the direction in which battery cells 10 including first side surfaces 10a on which electrode terminals 11 of battery module 1 are disposed are stacked, so as to extend along the direction in which battery cells 10 are stacked. Further, second cushion 720 is provided at the other corner portion located on the other side in the direction intersecting the direction in which battery cells 10 including first side surfaces 10a on which electrode terminals 11 of battery module 1 are arranged are stacked, so as to extend along the direction in which battery cells 10 are stacked.

Since positive electrode terminals 11A and negative electrode terminals 11B of adjacent battery cells 10 are alternately arranged along the DR1 direction, first corner portions 10ab on the positive electrode terminal 11A side and second corner portions 10ac on the negative electrode terminal 11B side are alternately arranged as viewed along the DR1 direction. Each of first corner portions 10ab and second corner portions 10ac alternately arranged constitutes an electrode-terminal-side corner portion, and each of first cushion 710 and second cushion 720 constitutes an electrode-terminal-side cushion.

Each of first cushion 710 and second cushion 720 may be provided to cover the corner portions of at least two or more battery cells 10. In the present embodiment, one corner portion of each of all the 24 battery cells 10 is covered with one cushion.

Referring to Figs. 14 and 15, the following describes configurations of first cushion 710 and second cushion 720. First cushion 710 and second cushion 720 have the same configuration. Fig. 14 shows a cross sectional structure of second cushion 720, but numerals in parentheses as additionally indicated with regard to second cushion 720 represent configurations on the first cushion 710 side.

As described above, since first corner portions 10ab on the positive electrode terminal 11A side and second corner portions 10ac on the negative electrode terminal 11B side are alternately arranged, first corner portion 10ab and second corner portion 10ac are interchanged with each other in the following description in the case of a battery cell 10 adjacent to battery cell 10 shown in the cross section shown in the figure.

Second cushion 720 is constituted of a resin-molded product, and includes: a first second-cushion region 720a that is hollow and that is located on the first side surface 10a side of each of battery cells 10; and a second second-cushion region 720b that is hollow and that is located on the third side surface 10c side constituting second corner portion 10ac together with first side surface 10a. First second-cushion region 720a is in abutment with the inner surface of first main body plate portion 110, and second second-cushion region 720b is in abutment with the inner surface of first peripheral wall portion 120.

First cushion 710 is constituted of a resin-molded product, and includes: a first first-cushion region 710a that is hollow and that is located on the first side surface 10a side of each of battery cells 10; and a second first-cushion region 710b that is hollow and that is located on the second side surface 10b side constituting first corner portion 10ab together with first side surface 10a. First first-cushion region 710a is in abutment with the inner surface of first main body plate portion 110, and second first-cushion region 710b is in abutment with the inner surface of first peripheral wall portion 120.

Further, as shown in Figs. 2 and 3, in each of first first-cushion region 710a, second first-cushion region 710b, first second-cushion region 720a, and second second-cushion region 720b, the plurality of groove portions 730g extending in the direction intersecting the direction (DR1 direction) in which battery cells 10 are stacked are provided at predetermined intervals in the direction in which battery cells 10 are stacked. Each of groove portions 730g functions to increase the rigidity of each of first cushion 710 and second cushion 720 that are the hollow resin-molded products.

Further, as shown in Fig. 15, a fourth cushion provided to extend along the direction in which battery cells 10 are stacked is provided at a fourth corner portion 10dc at which a fourth side surface 10d and third side surface 10c intersect with each other, and a third cushion provided to extend along the direction in which battery cells 10 are stacked is provided at a third corner portion 10db at which fourth side surface 10d located opposite to first side surface 10a of battery cell 10 and second side surface 10b intersect with each other.

Each of third corner portion 10db and fourth corner portion 10dc constitutes an electrode-terminal-opposing-side corner portion at the corner portion opposite to the electrode-terminal-side corner portion in the DR2 direction, and each of the third cushion and the fourth cushion constitutes an electrode-terminal-opposing-side cushion opposing to the electrode-terminal-side cushion in the DR2 direction.

In the present embodiment, cooling device 800, which is constituted of a resin-molded product and has elasticity, functions as each of the third cushion and the fourth cushion. A plurality of hollow regions are formed in cooling device 800, and cooling device 800 has a function of cooling battery cells 10 by allowing the coolant to pass through the hollow regions.

As shown in Fig. 11, in first binding bar 100 and second binding bar 200, first extension plates 190 provided at first peripheral wall portion 120 and second extension plates 290 provided at second peripheral wall portion 220 are fastened and fixed to third coupling plate 430 (on the left side of the shown cross section) and fourth coupling plate 440 (on the right side of the shown cross section) by using rivets RB. On this occasion, first binding bar 100 and second binding bar 200 are fixed in the state in which the external forces for bringing them closer to each other are applied thereto.

As a result, first cushion 710 and second cushion 720 each serving as the electrode-terminal-side cushion are pressed to the electrode-terminal-side corner portion side. Similarly, cooling device 800 (third cushion and fourth cushion) serving as the electrode-terminal-opposing-side cushion is pressed against the electrode-terminal-opposing-side corner portion.

Since each of first cushion 710, second cushion 720, and cooling device 800 is a hollow resin-molded product, a reaction force (elastic force) is generated when compressed. As a result, based on cushioning actions of first cushion 710, second cushion 720, and cooling device 800, battery cells 10 can be stably held inside battery module 1.

Each of first cushion 710 and second cushion 720 may be fixed to the inner surface of first binding bar 100 by a double-sided tape, an adhesive agent, a rivet, a screw, heat swaging, or the like. On the other hand, first cushion 710 and second cushion 720 are only in contact with battery cells 10 and are not fixed thereto.

Cooling device 800 may be fixed to the inner surface of second binding bar 200 by a double-sided tape, an adhesive agent, a rivet, a screw, heat swaging, or the like. On the other hand, cooling device 800 is only in contact with battery cells 10 and is not fixed thereto.

With this configuration, when a battery cell 10 is expanded, battery cell 10 can be slid in contact with first cushion 710, second cushion 720, and cooling device 800 in stacking direction DR1 of battery cells 10.

By employing the holding structure for battery cells 10 using first cushion 710, second cushion 720, and cooling device 800 described above, a holding area for battery cells 10 is increased, thereby reducing contact load (concentration of the contact load) on battery cells 10. As a result, a holding force for battery cells 10 per unit area can be reduced.

Further, since first cushion 710 and second cushion 720 are disposed in a clearance formed between first binding bar 100 and each battery cell 10 and cooling device 800 is disposed in a clearance formed between second binding bar 200 and each battery cell 10, the height of battery module 1 in the DR2 direction can be low while increasing the holding force for battery cells 10.

In the above-described configuration, as a preferable example, the cushions are provided to cover the four corners (first corner portion 10ab, second corner portion 10ac, third corner portion 10db, and fourth corner portion 10dc) of the stack of battery cells 10; however, a corner portion at which a cushion is provided can be selectively provided as appropriate.

Although the configuration in which cooling device 800 is also used as the third cushion and the fourth cushion is employed, a cushion having a configuration comparable to that of each of first cushion 710 and second cushion 720 may be employed as each of the third cushion and the fourth cushion.

### (Structure of Collective Terminal Base)

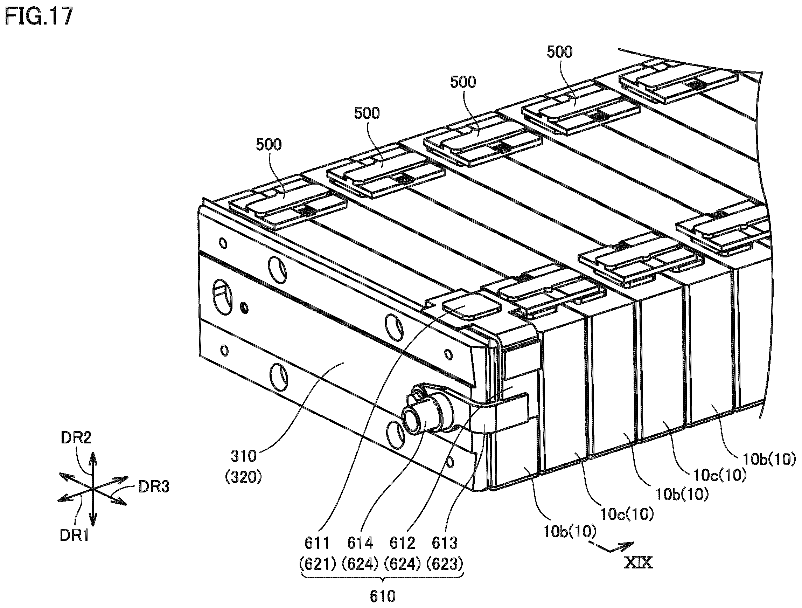

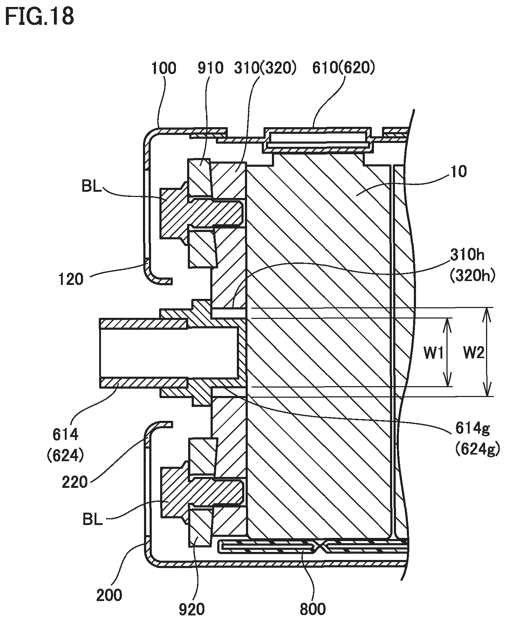

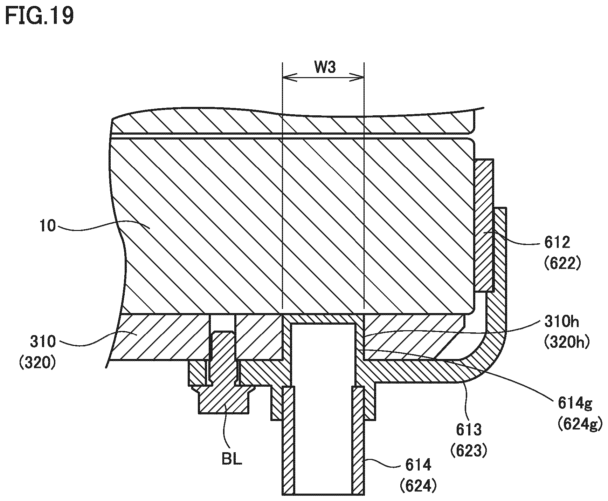

Next, referring to Figs. 16 to 19, a structure of each of the collective terminal bases provided at the side surface end portions (both end portions in stacking direction DR1) of battery module 1 will be described. Fig. 16 is a perspective view showing a configuration of first collective terminal base 610, Fig. 17 is a perspective view showing the configuration of first collective terminal base 610 in a state in which first binding bar 100 and second binding bar 200 are detached from battery module 1 in Fig. 16, Fig. 18 is a cross sectional view taken along a line XVIII-XVIII in Fig. 16, and Fig. 19 is a cross sectional view taken along a line XIX in Fig. 17.

Since the configurations of first collective terminal base 610 and second collective terminal base 620 are symmetrical at the side surface end portions facing each other, the configuration of first collective terminal base 610 will be described below. In the figure, numerals in parentheses represent corresponding configurations of second collective terminal base 620. In the description below, a configuration in which the collective terminal bases are provided on both the first end plate 310 side and the second end plate 320 side is shown, but a configuration in which a collective terminal base is provided on one of the end plate sides may be employed.

As shown in Fig. 16, first collective terminal base 610 is provided on the one side surface end portion (short side surface) side of battery module 1 located in the stacking direction (DR1 direction), and second collective terminal base 620 is provided on the other side surface end portion (short side surface) side of battery module 1 located in the stacking direction (DR1 direction).

As shown in Fig. 17, first collective terminal base 610 including first connection portion 614 coupled to an external connection member is joined to electrode terminal 11 of battery cell 10 that is in contact with first end plate 310. First connection portion 614 is provided on a surface of first end plate 310 opposite to its surface that is in contact with battery cell 10.

First collective terminal base 610 includes: a first connection terminal 611 connected to electrode terminal 11; a first first-extension terminal 612 extending from first connection terminal 611 to the third side surface 10c side of battery cell 10; and a second first-extension terminal 613 extending from first first-extension terminal 612 to the surface of first end plate 310 opposite to the surface that is in contact with battery cell 10. First connection portion 614 is provided to be connected to second first-extension terminal 613.

As shown in Figs. 18 and 19, first end plate 310 is provided with a first positioning hole 310h for positioning and fixing first connection portion 614 having a cylindrical shaft shape. Contact plates 910, 920 are fixed to first end plate 310 by bolts BL.

As shown in Fig. 18, when the outer diameter of first cylindrical shaft portion 614g inserted in first positioning hole 310h of first connection portion 614 is defined as W1, outer diameter W1 of first cylindrical shaft portion 614g is preferably smaller than inner diameter W2 of the cross section of first positioning hole 310h as viewed in the cross section in the DR2 direction. Thus, the position of first connection portion 614 in the DR2 direction can be adjusted.

On the other hand, as viewed in the cross section in the DR3 direction as shown in Fig. 19, outer diameter W1 of first cylindrical shaft portion 614g and inner diameter W3 of the cross section of first positioning hole 310h may be substantially the same.

As with first collective terminal base 610, as shown in Fig. 17, second collective terminal base 620 including a second connection portion 624 coupled to an external connection member is joined to electrode terminal 11 of battery cell 10 that is in contact with second end plate 320. Second connection portion 624 is provided on a surface of second end plate 320 opposite to its surface that is in contact with battery cell 10.

Second collective terminal base 620 includes: a second connection terminal 621 connected to electrode terminal 11; a first second-extension terminal 622 extending from second connection terminal 621 to the third side surface 10c side of battery cell 10; and a second second-extension terminal 623 extending from first second-extension terminal 622 to the surface of second end plate 320 opposite to the surface that is in contact with battery cell 10. Second connection portion 624 is provided to be connected to second second-extension terminal 623.

As shown in Figs. 18 and 19, second end plate 320 is provided with a second positioning hole 320h for positioning and fixing second connection portion 624 having a cylindrical shaft shape.

As shown in Fig. 18, when the outer diameter of second cylindrical shaft portion 624g inserted in second positioning hole 320h of second connection portion 624 is defined as W1, outer diameter W1 of second cylindrical shaft portion 624g is preferably smaller than inner diameter W2 of the cross section of second positioning hole 320h as viewed in the cross section in the DR2 direction. Thus, the position of second connection portion 624 in the DR2 direction can be adjusted.

On the other hand, as viewed in the cross section in the DR3 direction as shown in Fig. 19, outer diameter W1 of second cylindrical shaft portion 624g and inner diameter W3 of the cross section of second positioning hole 320h may be substantially the same.

First connection terminal 611, first first-extension terminal 612, second first-extension terminal 613, and first connection portion 614, which are included in first collective terminal base 610, are integrally provided in advance by welding or the like. First connection terminal 611 is fixed to electrode terminal 11 by welding, and second first-extension terminal 613 is fixed to first end plate 310 by using bolts BL or the like.

Also in second collective terminal base 620, as with first collective terminal base 610, second connection terminal 621, first second-extension terminal 622, second second-extension terminal 623, and second connection portion 624, which are included in second collective terminal base 620, are integrally provided in advance by welding or the like. Second connection terminal 621 is fixed to electrode terminal 11 by welding, and second second-extension terminal 623 is fixed to second end plate 320 by using bolts BL or the like.

In first collective terminal base 610 having the above-described configuration, second first-extension terminal 613 and first connection portion 614 are disposed in a region formed between first peripheral wall portion 120 and second peripheral wall portion 220. Similarly, in second collective terminal base 620, second second-extension terminal 623 and second connection portion 624 are disposed in a region formed between first peripheral wall portion 120 and second peripheral wall portion 220.

As described above, by employing the configuration in which first collective terminal base 610 and second collective terminal base 620 are disposed at the side surface end portions (both end portions in stacking direction DR1) of battery module 1, it is possible to employ a configuration in which many of the components of the collective terminal bases can be fixed to the side surfaces, on the DR3 direction side, of the plurality of stacked battery cells 10 and to the end plates. As a result, the height of battery module 1 in the DR2 direction can be low.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery assembly in which a plurality of battery cells (10) each having one side surface on which an electrode terminal (11) is disposed are stacked, the battery assembly comprising:
a first binding bar (100) provided to cover a side of each of the plurality of battery cells (10) on which the electrode terminal (11) is disposed; and
a plurality of bus bars (500) that each electrically join electrode terminals (11) of battery cells (10) adjacent to each other, wherein
each of the bus bars (500) is fixed at a position facing the electrode terminals (11) on an inner surface (110a) side of the first binding bar (100) on which the battery cells (10) are located, and
the bus bar (500) is not fixed to each of the electrode terminals (11) and is in contact with and connected to the electrode terminal (11).

2. The battery assembly according to claim 1, comprising a second binding bar (200) provided to cover a side of each of the battery cells (10) opposite to the side of the battery cell (10) on which the electrode terminal (11) is disposed, wherein
the first binding bar (100) and the second binding bar (200) are fastened and fixed together to generate a force for pressing the bus bar (500) against the electrode terminal (11).

3. The battery assembly according to claim 1 or 2, wherein a fixing recess (150) to fix the bus bar (500) is provided in the inner surface (110a) of the first binding bar (100).

4. The battery assembly according to any one of claims 1 to 3, wherein each of the plurality of battery cells (10) is a lithium ion battery cell.

5. A battery pack comprising the battery assembly according to any one of claims 1 to 4.
